# EUROPEAN PATENT SPECIFICATION

(11) **EP 1 809 529 B1**
(45) Date of publication and mention of the grant of the patent: **17.06.2009**
(21) Application number: 05777942.3
(22) Date of filing: 13.09.2005
(51) Int. Cl.: B62D 7/20, B62D 7/16, F16B 2/06, F16B 7/04

(54) **CLAMP ARRANGEMENT**
KLEMMANORDNUNG
ARRANGEMENT DE SERRAGE

(30) Priority: 12.10.2004 SE 0402487
(43) Date of publication of application: 25.07.2007
(73) Proprietor: VOLVO LASTVAGNAR AB, 405 08 Göteborg (SE)
(72) Inventor: HURTIG, Sven-Ake, S-426 69 Västra Frölunda (SE)
(74) Representative: Fröhling, Werner Otto
(86) International application number: PCT/SE2005/001332
(87) International publication number: WO 2006/041371

(56) References cited:
- EP-A1- 0 497 513
- DE-U1- 7 616 552
- US-A- 2 451 062
- US-A- 2 723 140
- US-A- 2 723 141
- US-A- 4 657 424
- US-A- 5 059 053

## Description

### FIELD OF THE INVENTION

The present invention relates to a clamp arrangement for fixing a first threaded shaft section to a second threaded tubular section, in which the clamp arrangement comprises means for rotationally locking the clamp arrangement to the first threaded shaft section. The invention may advantageously be used in order to fix a ball joint to a tubular rod.

### BACKGROUND OF THE INVENTION

In order to be able to take up tolerances in steering tie rods, track rods and various stabilizer bars on a vehicle, for example, it is advantageous to be able to adjust the length of the rods. This is important, for example, when a track rod is to be adjusted in the production of a vehicle. If the track rod is not of the correct length the vehicle will not track correctly, which among other things leads to increased tire wear. The commonest way of adjusting a track rod is to design the ball joints with a threaded shaft section, which runs in a tubular rod having an internal thread. When adjusted to the correct length, the tubular rod is fixed to the threaded shaft section of the ball joint with a clamp. In order to allow the track rod to be clamped together, the end sections of the tubular rod are slotted. Clamps of this type are disclosed, for example, in DE 10031594 A1 and DE 19900264 A1.

These known clamps function excellent in most cases. In certain cases, however, according to how much space is available, the clamp may strike against another component, depending on how the clamp is aligned. It is desirable, therefore, to be able to orient the clamp in a predefined rotational position.

US 4,657,424 discloses an adjuster for joining a ball stud assembly to the linkage bar of an automotive steering linkage. The adjuster comprises a threaded fastener attached to the ball stud assembly, a threaded portion extending axially form the linkage bar, and a tubular sleeve having internal threads which are threadedly engaged with the threaded fastener attached to the ball stud assembly and to the threaded portion extending from the linkage bar. First and second nonrotatable clamps are disposed about the tubular sleeve in the vicinity of each sleeve in the vicinity of each threaded portion and function to lock the tubular sleeve against rotation. The nonrotatable clamps may be placed upon the ball stud assembly and linkage bar in only one rotational orientation.

US 5,059,053 as closest prior art discloses a rod for a vehicle, comprising a first threaded shaft, a second threaded tubular section, and a clamp arrangement, the clamp arrangement comprising a shackle having two legs and a clamping device for tightening the clamp arrangement and fixing a first threaded shaft section to a second threaded tubular section when the shackle is arranged on the second threaded tubular section, wherein the clamp arrangement comprises a positioning device, the positioning device ensuring that the clamp arrangement is positioned at the end of the tubular section, since the positioning device prevents the clamp arrangement being shifted axially towards the middle of the tubular section in that the positioning device will come to bear against the end surface of the tubular section

### SUMMARY OF THE INVENTION

The object of the invention is therefore to provide a clamp arrangement which permits a rotationally locked orientation of the clamp arrangement in relation to a shaft section.

According to the invention this object is achieved by the solution described in the characterizing part of claim 1. The other patent claims contain advantageous embodiments and further developments of the clamp arrangement according to the invention.

The object of the invention is achieved by a clamp arrangement for a vehicle, comprising a shackle having two legs and a clamping device for tightening the clamp arrangement and fixing a first threaded shaft section to a second threaded tubular section when the shackle is arranged on the second threaded tubular section in that the clamp arrangement comprises a positioning device (7), intended to interact with an opposing slot in the first threaded shaft section for rotationally locking the clamp arrangement in relation to the first threaded shaft section.

This first embodiment of the clamp arrangement according to the invention provides a clamp arrangement for a vehicle which permits a predefined rotational orientation of the clamp arrangement in relation to a shaft section. The advantage of this is that the clamp arrangement can be positioned in a predefined manner which prevents the clamp arrangement interfering with other components.

The invention is particularly advantageous when it is applied to constructions having two threaded components which are connected to one another by way of these threads. Track rods on vehicles, for example, comprises a ball joint provided with a threaded shaft section which is arranged in an internally threaded rod for rotation of the ball joint and the threaded rod in relation to one another. After adjusting the length by turning, the clamp arrangement is used in order to lock the rod and the shaft section to prevent their relative rotation by clamping together the slotted end sections of the rod against the shaft section. The clamp arrangement according to the invention is preferably designed with a positioning device, which is intended to interact with an opposing slot in a shaft section, which is adjustably coupled to the component on which the clamp arrangement is arranged. Such a shaft section is usually situated in a position outside the shackle of the clamp arrangement, that is to say in a position which is axially offset in relation to the position of the shackle. In the case of the track rod this means that the positioning device can be designed to rotationally lock the shaft section of the ball joint and the clamp arrangement relative to one another, so that in the event of longitudinal adjustment, that is to say turning of the shaft section and the rod relative to one another, the orientation of the clamp arrangement in relation to the ball joint will be maintained. Such a positioning device may be furnished, for example, by providing the shackle with a pin, which projects from the shackle in an axial direction. The pin at its free end may furthermore have a part extending radially inwards, which can be placed in a slot in the shaft section. Such a pin will also be capable of locking the clamp arrangement to prevent axial movement (away from the ball joint) relative to the rod, in that the pin will come to bear against the end surface of the rod.

In an advantageous further development of the clamp arrangement according to the invention the positioning device is conical and is provided with a radius on its bearing surface. The advantage of this is that the positioning device can interact with a milled or forged slot in the shaft section, which is easy and inexpensive to produce.

In another advantageous further development of the clamp arrangement according to the invention the clamp arrangement comprises two positioning devices. The advantage of this is that the positioning becomes more reliable. Clamp arrangements having more than one positioning device located in different ways can furthermore be used in order to ensure that different clamp arrangements are used on the correct shaft section.

### BRIEF DESCRIPTION OF THE DRAWINGS

The invention will be described in more detail below with reference to exemplary embodiments, which are shown in the drawings attached, in which
- Fig. 1: shows a clamp arrangement according to the invention and
- Fig. 2: shows a clamp arrangement according to the invention fitted to a track rod.

### DESCRIPTION OF EMBODIMENTS

The exemplary embodiments of the invention and further developments described below must be regarded solely as examples and shall in no way limit the scope of the patent claims. In the exemplary embodiments here described the same reference numerals in the various drawings relate to the same type of part. Each part is therefore not described in detail in all exemplary embodiments.

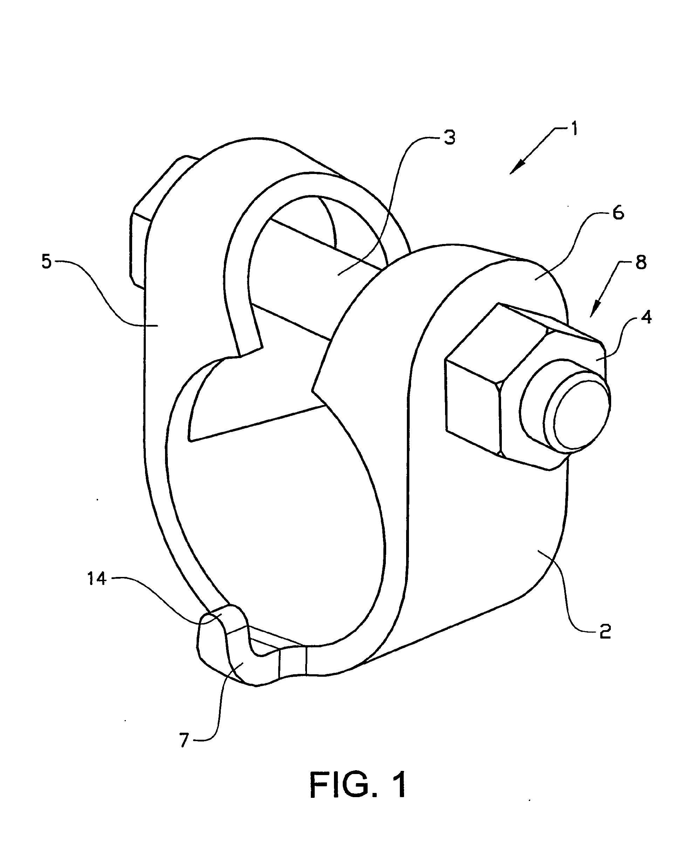

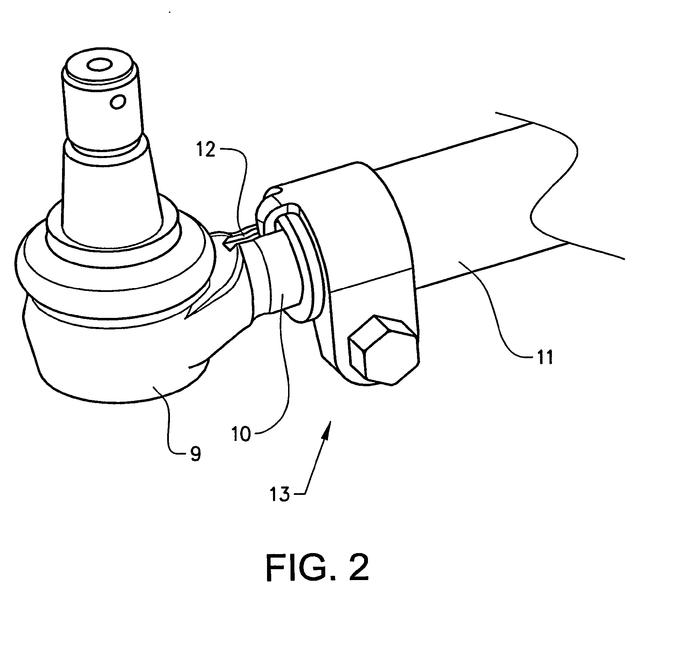

The clamp arrangement 1 for a vehicle shown in Figs. 1 and 2 comprises a shackle 2 and a clamping device 8 in the form of a bolt fastener. The shackle is designed with a circular opening for enclosing a tubular rod and with two legs 5, 6. The legs 5, 6 are each provided with a hole, through which the bolt fastener 8 runs. The bolt fastener here comprises a bolt 3 and a nut 4. When the bolt fastener is tightened the diameter of the opening in the clamp arrangement will be reduced. When the clamp arrangement is fitted to a slotted tube, the tube will thereby be pressed together, thereby fixing the tube to a shaft section located in the tube. The tube and the shaft section are advantageously threaded, which permits a reliable fine adjustment of the shaft section in relation to the tube.

The clamp arrangement also comprises a positioning device 7, here in the form of a bent-down pin. The positioning device 7 is intended to interact with a shaft section 10, which is adjustably coupled to the component on which the clamp arrangement is arranged. In the example illustrated the pin 7 is intended to interact with a slot in the shaft section 10. This shaft section is preferably situated axially adjacent to the shackle, or in other words the shaft section with which the pin interacts is located in a position outside the shackle of the clamp arrangement, that is to say in a position which is offset in an axial direction 20 in relation to the position of the shackle. Since the pin 7 extends from the shackle 7 in an axial direction, that is to say in the longitudinal direction of the rod 11, the pin 7 can come into engagement with the shaft section 10 whilst the shackle 2 can bear against the rod 11 over its entire width. The bending of the pin 7 means that the pin in its free end has a part which is basically directed radially inwards and which is intended to engage with the slot 12 in the shaft section 10. Figs. 1 and 2 illustrate the axial direction 20 and consequently the radial direction is conventionally perpendicular to this direction.

The pin 7 and the slot thereby allow the clamp arrangement 1 always to have the same predetermined position in relation to the shaft section, that is to say the clamp arrangement is rotationally locked in relation to the shaft section. The object of this is to prevent the legs and/or the bolt fastener interfering with other components of the vehicle, which may be the case when the clamp arrangement is fitted with an incorrect orientation relative to the shaft section. The pin 7 may be located anywhere around the shackle opening. The chosen position of the pin is determined by how the clamp arrangement is to be oriented in relation to the slot in the shaft section.

Fig. 2 shows a clamp arrangement 1 fitted to one end of a track rod 13. The track rod 13 comprises a tubular rod 11 with a ball joint 9 at each end. One end of the track rod is shown here, comprising a ball joint 9 with a shaft section 10 and a tubular rod 11. The shaft section 10 is threaded with a suitable thread which matches an internal thread in the tubular rod 11. The tubular rod is furthermore slotted (not shown) at the end section, so that it can be clamped together. When the tubular rod 11 is to be fixed to the shaft section 10, the clamping device of the bolt fastener is tightened so that the internal thread of the tubular rod is pressed against the thread of the shaft section.

When the length of the track rod is to be adjusted, the bolt fastener is slackened somewhat. The tubular rod is then rotated as far as necessary. Since the positioning device 7 interacts with the slot 12, the clamp arrangement will follow the movement of the shaft section 10, so that the clamp arrangement assumes the same orientation in relation to the ball joint 9 throughout the entire adjustment process. When the adjustment is completed, the bolt fastener is tightened again. Since the clamp arrangement is always oriented in the same way in relation to the shaft section, this facilitates fitting whilst at the same time preventing the clamp arrangement from interfering with external components, such as the vehicle front axle, for example. The positioning device 7 furthermore ensures that the clamp arrangement is positioned at the end of the tubular rod, since the positioning device 7 prevents the clamp arrangement being shifted axially towards the middle of the tubular rod, that is to say away from the ball joint 9.

It would also be possible to use a shaft section and a tubular rod without threads. The advantage of threads is firstly that fixing the rod to the shaft section is rendered more reliable and secondly that a fine adjustment of the length of the tubular rod can be performed in a more reliable manner.

In a further development of the clamp arrangement according to the invention the positioning device is of conical shape. Giving the positioning device a conical shape means that any tolerances in the positioning device and in the slot can be compensated for. Giving the bearing surface 14 of the positioning device against the slot a radius that corresponds to the radius of the slot also improves the bearing against the bottom of the slot.

In another further development of the clamp arrangement according to the invention the clamp arrangement comprises two positioning devices. Using two positioning devices increases the reliability of the orientation of the clamp coupling, should one positioning device be damaged, for example. Locating the positioning devices asymmetrically, that is to say adjusting the positioning devices to interact with slots that are located asymmetrically in the shaft section allows different clamp arrangements to be adjusted to different shaft sections. The asymmetry serves to prevent a clamp arrangement being fitted in the incorrect place. This is advantageous, for example, where the accessible space is dependent upon the location, that is to say when the clamp arrangement must have a different orientation depending on how it is located.

The invention must not be regarded as being limited to the exemplary embodiments described above, a number of further variants and modifications being feasible without departing from the scope of the following patent claims. For example, the clamp arrangement may also be used for other types of clamped connection in which a shaft section and a tubular element are to be fixed to one another.

## Claims

1. A rod for a vehicle, comprising a first threaded shaft, a second threaded tubular section, and a clamp arrangement (1), the clamp arrangement comprising a shackle (2) having two legs (5, 6) and a clamping device (8) for tightening the clamp arrangement and fixing a first threaded shaft section (10) to a second threaded tubular section (11) when the shackle (2) is arranged on the second threaded tubular section (11), wherein the clamp arrangement comprises a positioning device (7), the positioning device (7) ensuring that the clamp arrangement is positioned at the end of the tubular section, since the positioning device prevents the clamp arrangement being shifted axially towards the middle of the tubular section in that the positioning device will come to bear against the end surface of the tubular section, **characterized in that** the positioning device (7) is intended to interact with an opposing slot (12) in the first threaded shaft section (10) for rotationally locking the clamp arrangement (1) in relation to the first threaded shaft section (10).

2. A rod as claimed in claim 1, **characterized in that** the positioning device (7) comprises a pin integrated with the shackle (2).

3. A rod as claimed in claim 1 or 2, **characterized in that** the positioning device (7) is conical.

4. A rod as claimed in any one of claims 1 to 3, **characterized in that** the positioning device (7) is provided with a radius in the bearing section (14) thereof.

5. A rod as claimed in any one of claims 1 to 4, **characterized in that** the clamp arrangement comprises two positioning devices (7) intended to interact with two opposing slots in a shaft section.

6. A rod as claimed in any one of claims 1 to 5, **characterized in that** the clamping device (8) comprises a bolt (3) and a nut (4).

7. A rod as claimed in any one of claims 1 to 6, **characterized in that** the clamp arrangement is made of a metallic material.

8. A rod as claimed in any one of claims 1 to 7, **characterized in that** the rod comprises a ball joint (9).

9. A rod as claimed in claim 8, **characterized in that** the rod comprises two ball joints (9) and two clamp arrangements (1).

## Patentansprüche

1. Stange für ein Fahrzeug mit einem ersten, mit einem Gewinde versehenen Schaftabschnitt, einem zweiten, mit einem Gewinde versehenen rohrförmigen Abschnitt und einer Klemmanordnung (1), wobei die Klemmanordnung eine Lasche (2) mit zwei Schenkeln (5, 6) und eine Klemmvorrichtung (8) für ein Anziehen der Klemmanordnung und eine Befestigung eines ersten, mit einem Gewinde versehenen Schaftabschnitts (10) an einem zweiten, mit einem Gewinde versehenen rohrförmigen Abschnitt (11) umfasst, wenn die Lasche (2) auf dem zweiten, mit einem Gewinde versehenen rohrförmigen Abschnitt (11) angeordnet ist, wobei die Klemmanordnung eine Positioniervorrichtung (7) umfasst, wobei die Positioniervorrichtung (7) sicherstellt, dass die Klemmanordnung an dem Ende des rohrförmigen Abschnitts positioniert wird, da die Positioniervorrichtung verhindert, dass die Klemmanordnung axial in Richtung der Mitte des rohrförmigen Abschnitts verschoben wird, indem die Positioniervorrichtung zum Anliegen gegen die Stirnfläche des rohrförmigen Abschnitts kommt, **dadurch gekennzeichnet, dass** die Positioniervorrichtung (7) dazu bestimmt ist, mit einem gegenüberliegenden Schlitz (12) in dem ersten, mit einem Gewinde versehenen Schaftabschnitt (10) für eine Drehverriegelung der Klemmanordnung (1) bezüglich des ersten, mit einem Gewinde versehenen Schaftabschnitts (10) zusammenzuwirken.

2. Stange nach Anspruch 1, **dadurch gekennzeichnet, dass** die Positioniervorrichtung (7) einen in die Lasche (2) integrierten Stift aufweist.

3. Stange nach Anspruch 1 oder 2, **dadurch gekennzeichnet, dass** die Positioniervorrichtung (7) konisch ist.

4. Stange nach einem der Ansprüche 1 bis 3, **dadurch gekennzeichnet, dass** die Positioniervorrichtung (7) in ihrem Anlageabschnitt (14) mit einem Radius versehen ist.

5. Stange nach einem der Ansprüche 1 bis 4, **dadurch gekennzeichnet, dass** die Klemmanordnung zwei Positioniervorrichtungen (7) umfasst, die für eine Zusammenwirkung mit zwei gegenüberliegenden Schlitzen in einem Schaftabschnitt bestimmt sind.

6. Stange nach einem der Ansprüche 1 bis 5, **dadurch gekennzeichnet, dass** die Klemmvorrichtung (8) einen Bolzen (3) und eine Mutter (4) umfasst.

7. Stange nach einem der Ansprüche 1 bis 6, **dadurch gekennzeichnet, dass** die Klemmanordnung aus einem metallischen Material hergestellt ist.

8. Stange nach einem der Ansprüche 1 bis 7, **dadurch gekennzeichnet, dass** die Stange ein Kugelgelenk (9) umfasst.

9. Stange nach Anspruch 8, **dadurch gekennzeichnet, dass** die Stange zwei Kugelgelenke (9) und zwei Klemmanordnungen (1) umfasst.

## Revendications

1. Tige destinée à un véhicule, comprenant un premier arbre fileté, un tronçon tubulaire fileté, et un agencement de serrage (1), l'agencement de serrage comprenant une manille (2) ayant deux pattes (5, 6) et un dispositif de serrage (8) pour serrer l'agencement de serrage et fixer un premier tronçon d'arbre fileté (10) sur un second tronçon tubulaire fileté (11) lorsque la manille (2) est agencée sur le second tronçon tubulaire fileté (11), l'agencement de serrage comprenant un dispositif de positionnement (7), le dispositif de positionnement (7) garantissant que l'agencement de serrage est positionné à l'extrémité du tronçon tubulaire puisque le dispositif de positionnement empêche que l'agencement de serrage ne soit décalé axialement vers le milieu du tronçon tubulaire, en ce sens que le dispositif de positionnement sera en appui contre la surface d'extrémité du tronçon tubulaire, **caractérisée en ce que** le dispositif de positionnement (7) est prévu pour interagir avec une fente opposée (12) dans le premier tronçon d'arbre fileté (6) pour verrouiller de manière rotative l'agencement de serrage (1) par rapport au premier tronçon d'arbre filetée (6).

2. Tige selon la revendication 1, **caractérisée en ce que** le dispositif de positionnement (7) comprend une broche intégrée à la manille (2).

3. Tige selon la revendication 1 ou 2, **caractérisée en ce que** le dispositif de positionnement (7) est conique.

4. Tige selon l'une quelconque des revendications 1 à 3, **caractérisée en ce que** le dispositif de positionnement (7) est muni d'un rayon dans son tronçon de support (14).

5. Tige selon l'une quelconque des revendications 1 à 4, **caractérisée en ce que** l'agencement de serrage comprend deux dispositifs de positionnement (7) prévus pour interagir avec deux fentes opposées dans un tronçon d'arbre.

6. Tige selon l'une quelconque des revendications 1 à 5, **caractérisée en ce que** le dispositif de serrage (8) comprend un boulon (3) et un écrou (4).

7. Tige selon l'une quelconque des revendications 1 à 6, **caractérisée en ce que** l'agencement de serrage est réalisé en un matériau métallique.

8. Tige selon l'une quelconque des revendications 1 à 7, **caractérisée en ce que** la tige comprend un joint à rotule (9).

9. Tige selon la revendication 8, **caractérisée en ce que** la tige comprend deux joints à rotule (9) et deux agencements de serrage (1).
